# EUROPEAN PATENT SPECIFICATION

(11) **EP 3 731 552 B1**
(45) Date of publication and mention of the grant of the patent: **03.08.2022**
(21) Application number: 18930082.5
(22) Date of filing: 17.08.2018
(51) Int. Cl.: H04W 12/60, H04W 76/18, H04W 12/06

(54) **INFORMATION TRANSMISSION METHOD AND APPARATUS, AND COMMUNICATION DEVICE**
INFORMATIONSÜBERTRAGUNGSVERFAHREN UND VORRICHTUNG UND KOMMUNIKATIONSVORRICHTUNG
PROCÉDÉ ET APPAREIL DE TRANSMISSION D'INFORMATIONS, ET DISPOSITIF DE COMMUNICATION

(43) Date of publication of application: 28.10.2020
(73) Proprietor: GUANGDONG OPPO MOBILE TELECOMMUNICATIONS CORP., LTD., Wusha, Chang'an Dongguan, Guangdong 523860 (CN)
(72) Inventor: WANG, Shukun, Dongguan, Guangdong 523860 (CN)
(74) Representative: Manitz Finsterwald Patent- und Rechtsanwaltspartnerschaft mbB
(86) International application number: PCT/CN2018/101204
(87) International publication number: WO 2020/034229

(56) References cited:
- WO-A1-2018/126400
- WO-A1-2018/142207
- CN-A- 107 295 515
- CN-A- 107 959 953
- CN-A- 108 307 452
- US-A1- 2018 220 486
- QUALCOMM INCORPORATED: "(TP for NR BL CR for TS 38.423) Periodic RNAU Without Anchor Relocation", 3GPP DRAFT; R3-183735_PERIODIC RNAU, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Montreal, Canada; 20180702 - 20180706 1 July 2018 (2018-07-01), XP051468020, Retrieved from the Internet: URL:http://www.3gpp.org/ftp/Meetings%5F3GP P%5FSYNC/RAN3/Docs [retrieved on 2018-07-01]
- ZTE et al.: "Consideration on periodic RAN area update procedure", 3GPP TSG-RAN WG2 Meeting#100 R2-172615, 1 December 2017 (2017-12-01), XP051371192,
- VIVO: "Security aspects in RRC re-establishment procedure", 3GPP TSG-RAN WG2 Meeting #103 R2-1811771, vol. RAN WG2, 10 August 2018 (2018-08-10), XP051521410,

## Description

### TECHNICAL FIELD

Embodiments of the present invention relate to the field of mobile communication technologies, and more particularly relates to an information transmission method and apparatus, and a communication device.

### BACKGROUND

A network side configures a radio access network (RAN) paging region for user equipment (UE) in an inactive state. In order to ensure the reachability of the UE in the RAN region, the UE needs to perform periodic location update according to a period of a network configuration. During the periodic location update, the UE needs to resume a radio resource control (RRC) connection. At this time, the network side may not migrate a UE context to a target base station, thereby reducing a signaling load inside the network side.

An original base station that originally stores the UE context transmits a packaged RRC release message to the target base station through a retrieve UE context failure message, and the target base station forwards the packaged message to the UE. However, how the target base station issues the packaged RRC release message to the UE is a problem needing to be solved.

3GPP document "(TP for NR BL CR for TS 38.423) Periodic RNAU Without Anchor Relocation" discloses signaling procedure for periodic RNAU without anchor relocation.

WO 2018/126400 A1 discloses a method for inactive state security support in wireless communications systems.

US 2018/220486 A1 discloses an RRC connection resume method of a wireless communication system.

WO2018/142207 A1 discloses a target network node for communicating with a user equipment that was previously in communication with a source network node.

### SUMMARY

The invention is defined by the independent claims. Embodiments of the present invention provide an information transmission method and apparatus, and a communication device.

The information transmission method provided by an embodiment of the present invention includes:
transmitting, by a first base station, a retrieve user equipment (UE) context request message to a second base station after receiving a radio resource control (RRC) resume request message transmitted by UE;
receiving, by the first base station, a retrieve UE context failure message transmitted by the second base station, wherein the retrieve UE context failure message includes an RRC release message and associated information of the RRC release message, and the associated information of the RRC release message includes transmission information and/or security information; and
transmitting, by the first base station, the RRC release message to the UE based on the associated information of the RRC release message.

The information transmission apparatus provided by an embodiment of the present invention includes:
a first receiving unit, configured to receive a radio resource control (RRC) resume request message transmitted by user equipment (UE);
a first transmitting unit, configured to transmit a retrieve UE context request message to a second base station;
a second receiving unit, configured to receive a retrieve UE context failure message transmitted by the second base station, wherein the retrieve UE context failure message includes an RRC release message and associated information of the RRC release message, and the associated information of the RRC release message includes transmission information and/or security information; and
a second transmitting unit, configured to transmit the RRC release message to the UE based on the associated information of the RRC release message.

The communication device provided by an embodiment of the present invention includes a processor and a memory. The memory is configured to store a computer program. The processor is configured to call and run the computer program stored in the memory to implement the information transmission method.

A chip provided by an embodiment of the present invention is configured to realize the information transmission method.

Specifically, the chip includes: a processor, configured to call and run a computer program from a memory to enable a device with the chip to implement the information transmission method.

A computer readable storage medium provided by an embodiment of the present invention is configured to store a computer program. The computer program enables a computer to implement the information transmission method.

A computer program product provided by an embodiment of the present invention includes a computer program command. The computer program command enables a computer to implement the information transmission method.

A computer program provided by an embodiment of the present invention enables a computer to implement the information transmission method when being run on the computer.

Through the above technical solutions, an RRC resume process is performed without transferring a UE context. In this process, a target base station (i.e., the first base station) transmits the RRC release message to the UE based on the associated information of the RRC release message, thereby ensuring that configuration information of the UE is updated securely and reliably.

### BRIEF DESCRIPTION OF THE DRAWINGS

The accompanying drawings described here are used to provide a further understanding of the present application and constitute a part of the present application. The schematic embodiments of the present application and the description thereof are used to explain the present application, and do not constitute an improper limitation on the present application. In the accompanying drawings:
FIG. 1 is a schematic diagram of architecture of a communication system provided by an embodiment of the present invention;
FIG. 2 is a schematic diagram of a radio access network (RAN) paging region provided by an embodiment of the present invention;
FIG. 3 is a schematic flow diagram of an information transmission method provided by an embodiment of the present invention;
FIG. 4 is a schematic diagram of executing a radio resource control (RRC) resume process among various nodes provided by an embodiment of the present invention;
FIG. 5 is a schematic diagram of a structure constitution of an information transmission apparatus provided by an embodiment of the present invention;
FIG. 6 is a schematic structure diagram of a communication device provided by an embodiment of the present invention;
FIG. 7 is a schematic structure diagram of a chip provided by an embodiment of the present invention; and
FIG. 8 is a schematic block diagram of a communication system provided by an embodiment of the present invention.

### DETAILED DESCRIPTION

The technical solutions in the embodiments of the present application will be described below with reference to the accompanying drawings in the embodiments of the present application. Obviously, the described embodiments are part of the embodiments of the present application, but not all of the embodiments. Based on the embodiments in the present application, all other embodiments obtained by a person of ordinary skill in the art without creative efforts shall fall within the protection scope of the present application.

The technical solutions according to the embodiments of the present application may be applied to a variety of communications systems, such as a Global System for Mobile communications ("GSM" for short) system, a Code Division Multiple Access ("CDMA" for short) system, a Wideband Code Division Multiple Access ("WCDMA" for short) system, a General Packet Radio Service ("GPRS" for short), a Long Term Evolution ("LTE" for short) system, an LTE Frequency Division Duplex ("FDD" for short) system, an LTE Time Division Duplex ("TDD" for short), a Universal Mobile Telecommunication System ("UMTS" for short), a Worldwide Interoperability for Microwave Access ("WiMAX" for short) communications system, a future 5G system, or the like.

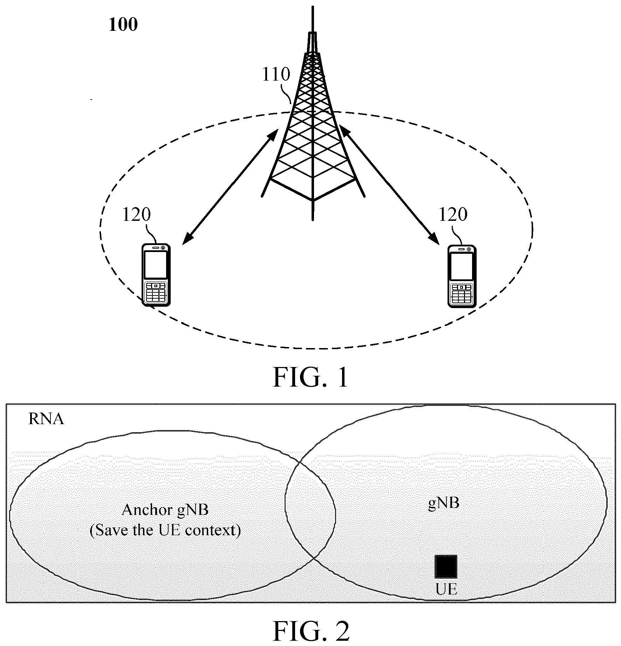

Exemplarily, a communication system 100 applied in an embodiment of the present invention is shown in FIG. 1. The communication system 100 may include a network device 110. The network device 110 may be a device communicating with user equipment (UE) 120 (or referred to as a communication terminal or a terminal). The network device 110 may provide communication coverage to a specific geographic region, and may communicate with UE located within the coverage region. Optionally, the network device 110 may be a base transceiver station (BTS) in a global system for mobile communications (GSM) or a code division multiple access (CDMA) system, or a nodeB (NB) in a wideband code division multiple access (WCDMA) system, or an evolutional node B (eNB or eNodeB) in a long term evolution (LTE) system, or a radio controller in a cloud radio access network (CRAN). Or, the network device may be a mobile switching center, a relay station, an access point, a vehicle device, a wearable device, a concentrator, a switchboard, a network bridge, a router, a network-side device in a 5th generation (5G) network, or a network device in a public land mobile network (PLMN) that will be evolved in the future, and the like.

The communication system 100 further includes at least one set of UE 120 located within a coverage range of the network device 110. The "UE" used herein includes, but not limited to, connection via a wired line, such as connection via public switched telephone networks (PSTN), a digital subscriber line (DSL), a digital cable, and a direct cable; and/or another data connection/network; and/or via a wireless interface, for example, for a cellular network, a wireless local area network (WLAN), a digital television network such as a DVB-H network, a satellite network and an AM-FM broadcast transmitter; and/or an apparatus of another set of UE, which is configured to receive/transmit a communication signal; and/or an Internet of things (IoT) device. The UE configured to realize communication through a wireless interface may be referred to as a "wireless communication terminal", a "wireless terminal", or a "mobile terminal". Examples of the mobile terminal include, but not limited to, a satellite or cellular phone, and a personal communications system (PCS) terminal that may combine a cellular radiotelephone with data processing, facsimile, and data communication capabilities; a radiotelephone, a pager, an Internet/intranet access, a Web browser, a notepad, a calendar, and/or a personal digital assistant (PDA) of a global positioning system (GPS) receiver; and a conventional laptop and/or palmtop receiver or other electronic apparatuses including radiotelephone transceivers. The UE may refer to an access terminal, UE, a user unit, a user station, a mobile station, a mobile platform, a remote station, a remote terminal, a mobile device, a user terminal, a terminal, a wireless communication device, a user agent, or a user apparatus. The access terminal may be a cellular phone, a cordless telephone, a session initiation protocol (SIP) telephone, a wireless local loop (WLL) station, a PDA, a handheld device having a wireless communication function, a computation device or other processing devices connected to a radio modem, a vehicle device, a wearable device, UE in a 5G network, or UE in the PLMN that will be evolved in the future, and the like.

Optionally, device to device (D2D) communication may be realized among the UE 120.

Optionally, a 5G system or 5G network may also be referred to as a new radio (NR) system or NR network.

FIG. 1 exemplarily illustrates one network device and two sets of UE. Optionally, the communication system 100 may include a plurality of network devices, and a coverage range of each network device may include other numbers of sets of UE, which is not limited by the embodiment of the present invention.

Optionally, the communication system 100 may also include other network entities such as a network controller and a mobile management entity, which is not limited by the embodiment of the present invention.

It should be understood that a device having a communication function in a network/system in the embodiment of the present invention may be referred to as a communication device. The communication system 100 shown in FIG. 1 is taken as an example. The communication device may include a network device 110 and UE 120 which have communication functions. The network device 110 and the UE 120 may be the above-mentioned specific devices, and descriptions thereof are omitted here. The communication device may also include other devices in the communication system 100, such as other network entities including the network controller, the mobile management entity, and the like, which is not limited by the embodiment of the present invention.

It should be understood that the terms "system" and "network" herein may often be interchanged herein. The term "and/or" herein is only an association relationship that describes associated objects, and represents that there may be three relationships. For example, A and/or B may represent that: A exists alone, A and B exist simultaneously, and B exists alone. In addition, the character "/" herein generally indicates that front and back associated objects are in an "or" relationship.

In order to meet pursuits of people for rate, latency, high-speed mobility and efficiency of business, and for the diversity and complexity of the business in the future life, the 3rd generation partnership project (3GPP) international organization for standardization starts to research and develop a 5^{th} generation (5G) mobile communication technology.

The technical solution of the embodiment of the present invention is mainly applied to a 5G mobile communication system. Of course, the technical solution of the embodiment of the present invention is not limited to the 5G mobile communication system, and may also be applied to other types of mobile communication systems. Main application scenarios in the 5G mobile communication system are described below:
1) An enhanced mobile broadband (eMBB) scenario: An eMBB aims at enabling a user to acquire multimedia contents, services, and data, and its business demand is growing rapidly. Since the eMBB may be deployed in different scenarios, such as in a room, a city, and a country, and its business capability and demand vary widely, it is necessary to analyze business in conjunction with specific deployment scenarios.
2) An ultra reliable low latency communication (URLLC) scenario: Typical applications of the URLLC include: industrial automation, electric power automation, telemedicine operation, traffic safety assurance, and the like.
3) A massive machine type of communication (mMTC) scenario: Typical characteristics of the URLLC include: high connection density, small data volume, delay-insensitive business, low cost and long service lives of modules, and the like.

In a 5G network environment, in order to reduce radio signaling, quickly resume wireless connections, and quickly resume data services, a new RRC state is defined, i.e., an RRC _INACTIVE state. This state is different from an RRC_IDLE state and an RRC_ACTIVE (i.e., RRC_CONNECTED) state.

RRC _IDLE: The mobility is based on cell re-selection of the UE, paging is initiated by a CN, and a paging region is configured by the CN. There is no UE AS context on a base station side. There is no RRC connection.

RRC _CONNECTED: There is an RRC connection, and a base station and the UE have UE AS contexts. A network side knows that the location of the UE is at a specific cell level. The mobility is the mobility controlled by the network side. Unicast data may be transmitted between the UE and the base station.

RRC _INACTIVE: The mobility is based on cell re-selection of the UE, there is a connection between CN and NR, the UE AS context exists on a certain base station, paging is triggered by a radio access network (RAN), an RAN-based paging region is managed by the RAN, and the network side knows that the location of the UE is at the level of the RAN-based paging region.

Referring to FIG. 2, when the UE is in the RRC INACTIVE state, the network side would configure the UE with an RAN paging region through a dedicated signaling, and the RAN paging region may be one cell or a plurality of cells. When the UE moves in this region, it does not need to notify the network side, and a mobility behavior in the idle state, i.e., the cell re-selection principle, is followed. When the UE moves out of the RAN configured paging region, the UE will be triggered to resume an RRC connection and reacquire the RAN configured paging region. When there is downlink data reaching the UE, a gNB that maintains a connection between the RAN and the CN for the UE will trigger all cells in the RAN paging region to transmit a paging message to the UE, so that the UE in the INACTIVE state may resume the RRC connection for data reception.

There are three cases when the UE enters the RRC_CONNECTED state from the RRC_IINACTIVE state:
I, when there is downlink data reaching the UE, the network side initiates initial paging of the RAN to prompt the UE to enter the connected state.
II, the UE itself initiates RAN location region update, such as periodic RAN location update or cross-region location update.
III, the UE has an uplink data transmitting demand, which prompts the UE to enter the connected state.

The UE in the inactive state is configured with the RAN paging region. In order to ensure the reachability of the UE in this region, the UE needs to perform the periodic location update according to a period of a network configuration. During the periodic location update, the UE resumes the RRC connection. At this time, the network side may not migrate a UE context to a target base station, thereby reducing a signaling load inside the network side.

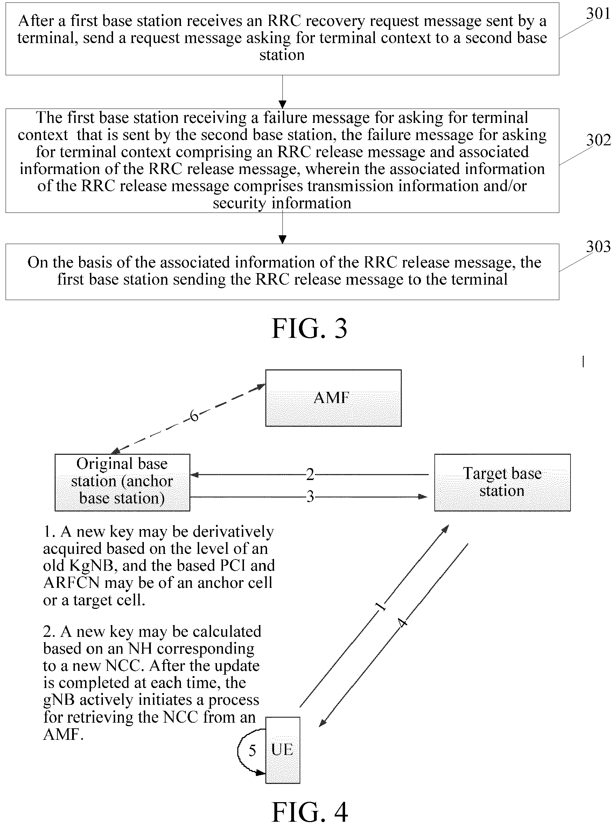

FIG. 3 is a schematic flow diagram of an information transmission method provided by an embodiment of the present invention. As shown in FIG. 3, the information transmission method includes the following steps:
Step 301: a first base station transmits a retrieve user equipment (UE) context request message to a second base station after receiving a radio resource control (RRC) resume request message transmitted by UE.

In the embodiment of the present invention, the first base station refers to a target base station, and the second base station refers to an original base station that stores a UE context. Types of the first base station and the second base station may be the same or different. For example, the first base station is an LTE base station, and the second base station is an NR base station, or the first base station and the second base station are both the NR base stations.

In the embodiment of the present invention, the first base station addresses the second base station according to a first user identifier carried in the RRC resume request message after receiving the RR resume request message transmitted by the UE, and transmits the retrieve UE context request message to the second base station.

The first user identifier carried in the RRC resume request message here is an I-radio network temporary identifier (I-RNTI) distributed by the second base station to the UE

In one implementation mode, the retrieve UE context request message carries at least one of:
a cause value for initiating an RRC resume process; and
first instruction information, the first instruction information being configured to instruct that an objective of a current RRC resume process is periodic location update.

In the embodiment of the present invention, the retrieve UE context request message is configured to verify an MAC-I carried in the retrieve UE context request message after the second base station receives the retrieve UE context request message; determine whether to execute an RRC resume process with the UE context being not transferred based on first information after the verification succeeds; and transmit a retrieve UE context failure message to the first base station when determines to execute the RRC resume process with the UE context being not transferred.

Further, the first information includes at least one of:
the cause value for initiating the RRC resume process carried in the retrieve UE context request message;
the first instruction information carried in the retrieve UE context request message, the first instruction information being configured to instruct that the objective of the current RRC resume process is periodic location update;
location update timer timeout information; and
instruction information configured to instruct whether arrival of downlink data exists.

Step 302: the first base station receives the retrieve UE context failure message transmitted by the second base station, wherein the retrieve UE context failure message includes an RRC release message and associated information of the RRC release message, and the associated information of the RRC release message includes transmission information and/or security information.

In the embodiment of the present invention, information included in the retrieve UE context failure message may have the following several cases:
Case I: The retrieve UE context failure message includes: the RRC release message, a key, an algorithm, configuration information of a source routing bridge (SRB1), and instruction information configured to instruct an RRC state that the UE is to enter.
Case II: The retrieve UE context failure message includes: the RRC release message, a packet data convergence protocol data unit (PDCP PDU) corresponding to the RRC release message, configuration information of an SRB1, and instruction information configured to instruct an RRC state that the UE is to enter.
Case III: The retrieve UE context failure message includes: the RRC release message, a transport block (TB) corresponding to the RRC release message, and instruction information configured to instruct an RRC state that the UE is to enter.

Step 303: the first base station transmits the RRC release message to the UE based on the associated information of the RRC release message.

In the embodiment of the present invention, the first base station transmits the RRC release message to the UE based on the associated information of the RRC release message may have the following several cases:
Case I: The first base station constructs the SRB1 based on the configuration information of the SRB1, performs encryption and integrity protection processing on the RRC release message based on the key and the algorithm, and transmits the RRC release message by using the SRB1.
Case II: The first base station constructs the SRB1 based on the configuration information of the SRB1, and transmits the PDCP PDU corresponding to the RRC release message by using the SRB1.
Case III: The first base station transmits the TB corresponding to the RRC release message by using an SRBO.

In the above solution of the embodiment of the present invention, 1) if the RRC release message is transmitted by using the SRB1, the UE decodes data on the resumed SRB1 to acquire the RRC release message, updates configuration according to the configuration information in the RRC release message, and enters a corresponding RRC state; and 2) if the RRC release message is transmitted on the SRBO in a container manner, the UE acquires TB data in the container on the SRBO, decodes the RRC release message according to the configuration information of the resumed SRB1, updates the configuration according to the configuration information in the RRC release message, and enters the corresponding RRC state.

In the above solution of the embodiment of the present invention, a key of a second node side is generated based on the following modes:
1) a new key is generated based on an original key; and
2) a new key is generated based on an NH corresponding to a new network control center (NCC). The NCC is acquired by the second node from a core network through active retrieve.

Further, the new key is generated based on a physical cell identifier (PCI) and an absolute radio frequency channel number (ARFCN) of the second base station, or the new key is generated based on a PCI and an ARFCN of the first base station. When the new key is generated through any of the above modes, input parameters may be the PCI and the ARFCN of the second base station, and may also be the PCI and the ARFCN of the first base station.

After the second base station generates the new key, the new key may be carried in the retrieve UE context failure message and transmitted to the first base station, which corresponds to the case I, i.e.: the retrieve UE context failure message includes: the RRC release message, the key, the algorithm, the configuration information of the SRB1, and the instruction information configured to instruct the RRC state that the UE is to enter. Or, the second base station encrypts the RRC release message by using the new key, and then transmits the encrypted RRC release message to the first base station through the retrieve UE context failure message.

The technical solution of the embodiment of the present invention is illustrated below by referring to network architecture shown in FIG. 4.

Referring to FIG. 4, the RRC connection resume process with the UE context being not migrated includes that:
1. The UE initiates the RRC connection resume process, and transmits the RRC resume request message to the target base station.

In this step, the key of the UE side may be updated through the following modes:
Mode I: The UE calculates the new key based on the physical cell identifier (PCI) and the absolute radio frequency channel number (ARFCN) of the target base station, and the new key may be applied to an MSG3 and an MSG4, or only applied to the MSG4.
Mode II: The UE calculates the new key based on the PCI and the ARFCN of an original base station (anchor base station), and the new key may be applied to an MSG3 and an MSG4, or only applied to the MSG4.

2. The target base station addresses the original base station according to the I-RNTI carried in the message after receiving the RRC resume request message, and initiates a UE context retrieve process to the original base station, that is, the target base station transmits the retrieve UE context request message to the original base station.

Optionally, the retrieve UE context request message carries the cause value that initiates the RRC resume process, or is added with one piece of instruction information. The instruction information is configured to instruct that the objective of the current RRC resume process is periodic location update.

3. The original base station firstly judges the legality of the UE according to the MAC-I information after receiving the retrieve UE context request message, and then determines whether to execute the RRC connection resume process with the UE context being not transferred. The determination may be based on the instruction or cause value in the retrieve UE context request message, or the location update timer timeout information, or whether the arrival of the downlink data exists. If the original base station determines that the UE context is not transferred, the key would be updated, and the RRC release message provided to the UE is generated. The original base station replies the retrieve UE context failure message to the target base station, and carries the RRC release message.

The content included in the retrieve UE context failure message may be realized through the following modes:
Mode I: the RRC release message, the key, the algorithm, and the configuration information of the SRB1 are included; a command that instructs an RRC state that the UE enters in the future is further included;
Mode II: the PDCP PDU corresponding to the RRC release message and the configuration information of the SRB1 (or RLC and MAC, physical channel configuration information) are included; a command that instructs an RRC state that the UE enters in the future is further included;
Mode III: the TB corresponding to the RRC release message is included; a command that instructs an RRC state that the UE enters in the future is further included.

4. The target base station knows that the UE executes a location update process with the context being not transferred after receiving the RRC release message included in the retrieve UE context failure message. The target base station: (corresponds to the mode I, the mode II and the mode III in the above step)
Mode I: The SRB1 is constructed, and the RRC release message is subjected to encryption and integrity protection and is transmitted by using the SRB1.
Mode II: The SRB1 is constructed, and PDCP PDU data of the RRC release message is transmitted by using the SRB1.
Mode III: TB data is transmitted through the SRBO, and the message of the SRBO may be the RRC release message or an RRC reject message.

5. After the UE receives the RRC release message,
corresponding to the mode I and the mode II in the step 4, the UE decodes data on the resumed SRB1 to acquire the RRC release message, updates the configuration according to the configuration information in the message, and enters the corresponding RRC state;
corresponding to the mode III in the step 4, if the UE receives the message on the SRBO, and the message includes a container containing the RRC release message generated by the original base station, the UE acquires the TB data in the container, decodes the RRC release message according to the configuration information of the resumed SRB1, then updates the configuration according to the configuration information in the message, and enters the corresponding RRC state.

6. When the original base station executes the RRC connection resume process of the UE, if no context is acquired, a path switch process is not triggered, so the original base station may actively initiate retrieving an updated NCC and NH from an action message format (AMF).

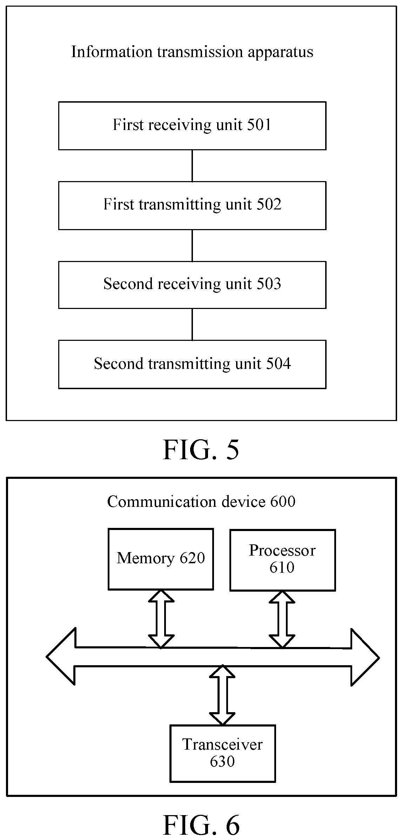

FIG. 5 is a schematic diagram of a structure constitution of an information transmission apparatus provided by an embodiment of the present invention. As shown in FIG. 5, the apparatus includes:
a first receiving unit 501, configured to receive a radio resource control (RRC) resume request message transmitted by user equipment (UE);
a first transmitting unit 502, configured to transmit a retrieve UE context request message to a second base station;
a second receiving unit 503, configured to receive a retrieve UE context failure message transmitted by the second base station, wherein the retrieve UE context failure message includes an RRC release message and associated information of the RRC release message, and the associated information of the RRC release message includes transmission information and/or security information; and
a second transmitting unit 504, configured to transmit the RRC release message to the UE based on the associated information of the RRC release message.

In one implementation mode, after the first receiving unit 501 receives the RRC resume request message transmitted by the UE, the first transmitting unit 502 addresses the second base station according to a first user identifier carried in the RRC resume request message, and transmits the retrieve UE context request message to the second base station.

In one implementation mode, the retrieve UE context request message carries at least one of:
a cause value for initiating an RRC resume process; and
first instruction information, the first instruction information being configured to instruct that an objective of a current RRC resume process is periodic location update.

In one implementation mode, the retrieve UE context request message is configured to verify an MAC-I carried in the retrieve UE context request message after the second base station receives the retrieve UE context request message; determine whether to execute an RRC resume process with a UE context being not transferred based on first information after the verification succeeds; and transmit the retrieve UE context failure message to the first base station when determines to execute the RRC resume process with the UE context being not transferred.

In one implementation mode, the first information includes at least one of:
the cause value for initiating the RRC resume process carried in the retrieve UE context request message;
the first instruction information carried in the retrieve UE context request message, the first instruction information being configured to instruct that the objective of the current RRC resume process is periodic location update;
location update timer timeout information; and
instruction information configured to instruct whether arrival of downlink data exists.

In one implementation mode, the retrieve UE context failure message includes:
an RRC release message, a key, an algorithm, configuration information of a source routing bridge (SRB1), and instruction information configured to instruct an RRC state that the UE is to enter; or,
an RRC release message, a packet data convergence protocol data unit (PDCP PDU) corresponding to the RRC release message, configuration information of an SRB1, and instruction information configured to instruct an RRC state that the UE is to enter; or,
an RRC release message, a transport block (TB) corresponding to the RRC release message, and instruction information configured to instruct an RRC state that the UE is to enter.

In one implementation mode, the apparatus further includes a construction unit and/or a secure processing unit.

The construction unit constructs the SRB1 based on the configuration information of the SRB1. The secure processing unit performs encryption and integrity protection processing on the RRC release message based on the key and the algorithm. The second transmitting unit 504 transmits the RRC release message by using the SRB1; or,
the construction unit constructs the SRB1 based on the configuration information of the SRB1, and the second transmitting unit 504 transmits the PDCP PDU corresponding to the RRC release message by using the SRB1; or,

The second transmitting unit 504 transmits the TB corresponding to the RRC release message by using an SRBO.

In one implementation mode, the RRC release message is configured to: after the UE receives the RRC release message,
if the RRC release message is transmitted by using the SRB1, the UE decodes data on the resumed SRB1 to acquire the RRC release message, updates configuration according to the configuration information in the RRC release message, and enters a corresponding RRC state; and
if the RRC release message is transmitted on the SRBO in a container manner, the UE acquires the TB data in the container on the SRBO, decodes the RRC release message according to the configuration information of the resumed SRB1, updates configuration according to the configuration information in the RRC release message, and enters a corresponding RRC state.

In one implementation mode, a key of a second node side is generated based on the following modes:
1) a new key is generated based on an original key; and
2) a new key is generated based on an NH corresponding to a new network control center (NCC). The NCC is acquired by the second node from a core network through active retrieve.

Further, the new key is generated based on a physical cell identifier (PCI) and an absolute radio frequency channel number (ARFCN) of the second base station, or the new key is generated based on a PCI and an ARFCN of the first base station.

Those skilled in the art should understand that the related descriptions of the information transmission apparatus of the embodiment of the present invention may be understood by referring to the related descriptions of the information transmission method of the embodiment of the present invention.

FIG. 6 is a schematic structural diagram of a communications device 600 according to an embodiment of the present application. The communications device may be a terminal device, or may be a network device (for example, the foregoing target base station or the original base station of the embodiment of the present application). The communications device 600 shown in FIG. 6 includes a processor 610. The processor 610 may invoke a computer program from a memory and run the computer program, to implement the method in the embodiments of the present application.

Optionally, as shown in FIG. 6, the communications device 600 may further include a memory 620. The processor 610 may invoke the computer program from the memory 620 and run the computer program, to implement the method in the embodiments of the present application.

The memory 620 may be a component independent of the processor 610, or may be integrated into the processor 610.

Optionally, as shown in FIG. 6, the communications device 600 may further include a transceiver 630. The processor 610 may control the transceiver 630 to communicate with another device, and specifically, the transceiver 630 may send information or data to another device, or receive information or data sent by another device.

The transceiver 630 may include a transmitter and a receiver. The transceiver 630 may further include an antenna. There may be one or more antennas.

Optionally, the communications device 600 may be the network device in the embodiments of the present application, and the communications device 600 can implement corresponding procedures implemented by the network device in various methods in the embodiments of the present application. For brevity, details are not described herein again.

Optionally, the communications device 600 may be the mobile terminal/terminal in the embodiments of the present application, and the communications device 600 can implement corresponding procedures implemented by the mobile terminal/terminal device in various methods in the embodiments of the present application. For brevity, details are not described herein again.

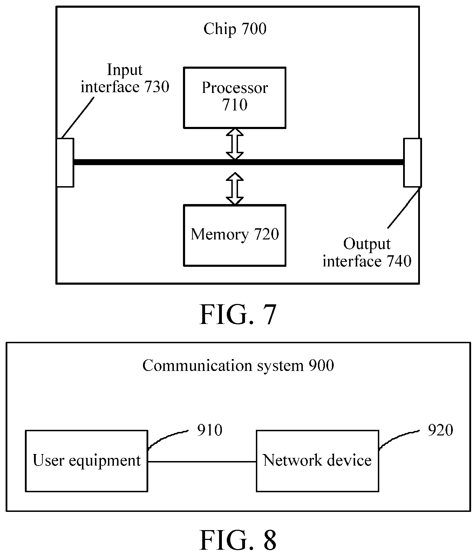

FIG. 7 is a schematic structural diagram of a chip according to an embodiment of the present application. The chip 700 shown in FIG. 7 includes a processor 710. The processor 710 may invoke a computer program from a memory and run the computer program, to implement the method in the embodiments of the present application.

Optionally, as shown in FIG. 7, the chip 700 may further include a memory 720. The processor 710 may invoke the computer program from the memory 720 and run the computer program, to implement the method in the embodiments of the present application.

The memory 720 may be a component independent of the processor 710, or may be integrated into the processor 710.

Optionally, the chip 700 may further include an input interface 730. The processor 710 may control the input interface 730 to communicate with another device or chip, and specifically, the input interface 730 may obtain information or data sent by another device or chip.

Optionally, the chip 700 may further include an output interface 740. The processor 710 may control the output interface 740 to communicate with another device or chip, and specifically, the output interface 740 may output information or data to another device or chip

Optionally, the chip may be applied to the mobile terminal/terminal device in the embodiments of the present application, and the chip can implement corresponding procedures implemented by the mobile terminal/terminal device in various methods in the embodiments of the present application. For brevity, details are not described herein again.

It should be noted that, the chip mentioned in the embodiments of the present application may also be referred to as a system-level chip, a system chip, a chip system, a system on chip, or the like.

FIG. 8 is a schematic structural diagram of a communication system 900 according to an embodiment of the present application. The communication system 800 shown in FIG. 8 includes a terminal device 910 and a network device 920.

The terminal device 910 can implement corresponding functions implemented by the terminal device in the foregoing method and the network device 920 can implement corresponding functions implemented by the network device in the foregoing method. For brevity, details are not described herein again.

It should be understood that, the processor of the embodiments of the present application may be an integrated circuit chip, has a signal processing capability, the steps of the foregoing method embodiment may be implemented by using a hardware integrated logic circuit in the processor and/or implemented by using an instruction in a software form. The foregoing processor may be a general purpose processor, a digital signal processor (DSP), a field programmable gate array (FPGA), an application specific integrated circuit (ASIC) or another programmable logic device, a transistor logic device, or a discrete hardware component. The foregoing general purpose processor may be a microprocessor, or may be any conventional processor, or the like. Steps of the methods disclosed with reference to the embodiments of the present invention may be directly executed and completed by means of a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing method embodiments in combination with hardware of the processor.

It should be understood that, the memory in the embodiments of the present application may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), and is used as an external cache. By way of examples but of no limitation, many forms of RAM are available, for example, a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). It should be noted that, the memory of the system and the method described in this embodiment of the present application is intended to include but is not limited to these memories and any other suitable type of memory.

It should be understood that, the memory is an example but is not intended for limitation. For example, the memory in the embodiments of the present application may alternatively be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), and the like. That is, the memory described in this embodiment of the present application is intended to include but is not limited to these memories and any other suitable type of memory.

An embodiment of the present application further provides a computer readable storage medium. The computer readable storage medium is configured to store a computer program.

Optionally, the computer readable storage medium may be applied to the network device in the embodiments of the present application, and the computer program enables a computer to execute a corresponding procedure implemented by the network device in the methods of the embodiments of the present application. For brevity, details are not described herein again.

Optionally, the computer readable storage medium may be applied to the mobile terminal/terminal device in the embodiments of the present application, and the computer program enables the computer to execute a corresponding procedure implemented by the mobile terminal/terminal device in the methods of the embodiments of the present application. For brevity, details are not described herein again.

The present application further provides a computer program product. The computer program product includes a computer program instruction.

Optionally, the computer program product may be applied to the network device in the embodiments of the present application, and the computer program instruction enables the computer to execute a corresponding procedure implemented by the network device in the methods of the embodiments of the present application. For brevity, details are not described herein again.

Optionally, the computer program product may be applied to the mobile terminal/terminal device in the embodiments of the present application, and the computer program instruction enables the computer to execute a corresponding procedure implemented by the mobile terminal/terminal device in the methods of the embodiments of the present application. For brevity, details are not described herein again.

The present application further provides a computer program.

Optionally, the computer program may be applied to the network device in the embodiments of the present application, and when run on a computer, the computer program instruction enables the computer to execute a corresponding procedure implemented by the network device in the methods of the embodiments of the present application. For brevity, details are not described herein again.

Optionally, the computer program may be applied to the mobile terminal/terminal device in the embodiments of the present application, and when run on a computer, the computer program instruction enables the computer to execute a corresponding procedure implemented by the mobile terminal/terminal device in the methods of the embodiments of the present application. For brevity, details are not described herein again.

A person of ordinary skill in the art may be aware that, in combination with the examples described in the embodiments disclosed in this specification, units and algorithm steps may be implemented by using electronic hardware or a combination of computer software and electronic hardware. Whether these functions are executed by means of hardware or software depends on specific applications and design constraints of the technical solutions. A person skilled in the art may use different methods to implement the described functions for each particular application, but it should not be considered that the implementation goes beyond the scope of the present application.

A person skilled in the art may clearly understand that, for simple and clear description, for specific work processes of the foregoing described system, apparatus, and unit, reference may be made to corresponding process in the foregoing method embodiments, and details are not described herein again.

In the several embodiments provided in the present application, it should be understood that the disclosed system, apparatus, and method may be implemented in other manners. For example, the apparatus embodiments described above are merely examples. For example, the unit division is merely logical function division, and there may be other division manners in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and the parts displayed as units may or may not be physical units, may be located in one position, or may be distributed on multiple network units. Some of or all of the units may be selected according to actual needs to achieve the objectives of the solutions of the embodiments.

In addition, functional units in the embodiments of the present application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of the present application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present application. The foregoing storage medium includes: any medium that can store program code, such as a USB flash drive, a removable hard disk, a read-only memory (ROM), a random access memory (RAM), a magnetic disk, or an optical disc.

Described above are merely specific implementations of the present application, but the protection scope of the present application is not limited thereto. Changes or replacements readily figured out by any person skilled in the art within the technical scope disclosed in the present application shall be covered by the protection scope of the present application. Therefore, the protection scope of the present application shall be subject to the protection scope of the claims.

## Claims

1. An information transmission method, comprising:
transmitting (301), by a first base station, a retrieve user equipment, UE, context request message to a second base station after receiving a radio resource control, RRC, resume request message transmitted by UE;
receiving (302), by the first base station, a retrieve UE context failure message transmitted by the second base station, wherein the retrieve UE context failure message comprises an RRC release message with associated information of the RRC release message; and
transmitting (303), by the first base station, the RRC release message to the UE based on the associated information of the RRC release message,
wherein the associated information of the RRC release message comprises a key and an algorithm, and the key is generated at the second base station by using a Physical Cell Identifier, PCI, and an Absolute Radio Frequency Channel Number, ARFCN, of the second base station.

2. The method according to claim 1, wherein the associated information of the RRC release message further comprises transmission information.

3. The method according to claim 1 or 2, wherein transmitting, by the first base station, the retrieve UE context request message to the second base station after receiving the RRC resume request message transmitted by UE comprises:
addressing, by the first base station, the second base station according to a first user identifier carried in the RRC resume request message after receiving the RR resume request message transmitted by the UE, and transmitting the retrieve UE context request message to the second base station.

4. The method according to any one of claims 1 to 3, wherein the retrieve UE context request message carries at least one of:
a cause value for initiating an RRC resume process; and
first instruction information, the first instruction information being configured to instruct that an objective of the RRC resume process is periodic location update.

5. The method according to claim 4, wherein the second base station is configured to verify an MAC-I carried in the retrieve UE context request message, determine whether or not to execute an RRC resume process with a UE context being not transferred based on first information after the verification succeeds, and transmit the retrieve UE context failure message to the first base station after determining to execute the RRC resume process with the UE context being not transferred.

6. The method according to claim 5, wherein the first information comprises at least one of:
the cause value for initiating the RRC resume process carried in the retrieve UE context request message;
the first instruction information carried in the retrieve UE context request message, the first instruction information being configured to instruct that the objective of the RRC resume process is periodic location update;
location update timer timeout information; and
instruction information configured to instruct whether arrival of downlink data exists.

7. The method according to any one of claims 1 to 6, wherein the retrieve UE context failure message further comprises:
configuration information of a source routing bridge, SRB1, and instruction information configured to instruct an RRC state that the UE is to enter.

8. The method according to claim 7, wherein transmitting, by the first base station, the RRC release message to the UE based on the associated information of the RRC release message comprises:
constructing, by the first base station, the SRB1 based on the configuration information of the SRB1, performing encryption and integrity protection processing on the RRC release message based on the key and the algorithm, and transmitting the RRC release message by using the SRB1.

9. The method according to claim 8, wherein the RRC release message is configured such that after the UE receives the RRC release message,
the UE decodes data on the resumed SRB1 to acquire the RRC release message, updates configuration according to the configuration information in the RRC release message, and enters a corresponding RRC state.

10. A communication device (600), comprising: a processor (610) and a memory (620), wherein the memory is configured to store a computer program, the processor is configured to call and run the computer program stored in the memory to implement the method according to any one of claims 1 to 9.

11. A chip (700), comprising: a processor (710), configured to call and run a computer program from a memory to enable a device with the chip to implement the method according to any one of claims 1 to 9.

12. A computer readable storage medium, being configured to store a computer program, wherein the computer program enables a computer to implement the method according to any one of claims 1 to 9.

13. A computer program product, comprising a computer program command, wherein the computer program command enables a computer to implement the method according to any one of claims 1 to 9.

## Patentansprüche

1. Informationssendeverfahren, das Folgendes umfasst:
Senden (301) einer UE-Kontextabrufanforderungsnachricht (UE = Teilnehmergerät) durch eine erste Basisstation an eine zweite Basisstation nach dem Empfangen einer durch das UE gesendeten RRC-Wiederaufbauanforderungsnachricht (RRC = Radio Resource Control);
Empfangen (302) einer durch die zweite Basisstation gesendeten UE-Kontextabruffehlernachricht durch die erste Basisstation, wobei die UE-Kontextabruffehlernachricht eine RRC-Abbaunachricht mit zugeordneten Informationen der RRC-Abbaunachricht umfasst; und
Senden (303) der RRC-Abbaunachricht durch die erste Basisstation an das UE basierend auf den zugeordneten Informationen der RRC-Abbaunachricht,
wobei die zugeordneten Informationen der RRC-Abbaunachricht einen Schlüssel und einen Algorithmus umfassen und der Schlüssel an der zweiten Basisstation unter Nutzung eines Physical Cell Identifier, PCI, und einer Absolute Radio Frequency Channel Number, ARFCN, der zweiten Basisstation generiert wird.

2. Verfahren nach Anspruch 1, wobei die zugeordneten Informationen der RRC-Abbaunachricht ferner Sendeinformationen umfassen.

3. Verfahren nach Anspruch 1 oder 2, wobei das Senden der UE-Kontextabrufanforderungsnachricht durch die erste Basisstation an die zweite Basisstation nach dem Empfangen der durch das UE gesendeten RRC-Wiederaufbauanforderungsnachricht Folgendes umfasst:
Adressieren der zweiten Basisstation durch die erste Basisstation in Abhängigkeit von einer in der RRC-Wiederaufbauanforderungsnachricht übermittelten ersten Benutzerkennung nach dem Empfangen der durch das UE gesendeten RR-Wiederaufbauanforderungsnachricht und Senden der UE-Kontextabrufanforderungsnachricht an die zweite Basisstation.

4. Verfahren nach einem der Ansprüche 1 bis 3, wobei die UE-Kontextabrufanforderungsnachricht mindestens eines von Folgendem übermittelt:
einen Ursachewert für das Starten eines RRC-Wiederaufbauprozesses; und
erste Anweisungsinformationen, wobei die ersten Anweisungsinformationen konfiguriert sind, um dazu anzuweisen, dass ein Ziel des RRC-Wiederaufbauprozesses ein periodisches Location Update ist.

5. Verfahren nach Anspruch 4, wobei die zweite Basisstation konfiguriert ist, um einen in der UE-Kontextabrufanforderungsnachricht übermittelten MAC-I zu verifizieren, basierend auf ersten Informationen zu bestimmen, ob ein RRC-Wiederaufbauprozess auszuführen ist, wobei ein UE-Kontext nicht übertragen wird, oder nicht, nachdem die Verifizierung erfolgreich gewesen ist, und die UE-Kontextabruffehlernachricht an die erste Basisstation zu senden, nachdem sie bestimmt hat, dass der RRC-Wiederaufbauprozess auszuführen ist, wobei der UE-Kontext nicht übertragen wird.

6. Verfahren nach Anspruch 5, wobei die ersten Informationen mindestens eines von Folgendem umfassen:
den in der UE-Kontextabrufanforderungsnachricht übermittelten Ursachewert für das Starten des RRC-Wiederaufbauprozesses;
die in der UE-Kontextabrufanforderungsnachricht übermittelten ersten Anweisungsinformationen, wobei die ersten Anweisungsinformationen konfiguriert sind, um dazu anzuweisen, dass das Ziel des RRC-Wiederaufbauprozesses ein periodisches Location Update ist;
Location-Update-Timer-Timeout-Informationen; und
Anweisungsinformationen, die konfiguriert sind, um dazu anzuweisen, ob eine Ankunft von Downlink-Daten gegeben ist.

7. Verfahren nach einem der Ansprüche 1 bis 6, wobei die UE-Kontextabruffehlernachricht ferner Folgendes umfasst:
Konfigurationsinformationen einer Source Routing Bridge, SRB1, und Anweisungsinformationen, die konfiguriert sind, um zu einem RRC-Zustand, in den das UE eintreten soll, anzuweisen.

8. Verfahren nach Anspruch 7, wobei das Senden der RRC-Abbaunachricht durch die erste Basisstation an das UE basierend auf den zugeordneten Informationen der RRC-Abbaunachricht Folgendes umfasst:
Bilden der SRB1 durch die erste Basisstation basierend auf den Konfigurationsinformationen der SRB1, Durchführen einer Verschlüsselungs- und Integritätsschutzverarbeitung an der RRC-Abbaunachricht basierend auf dem Schlüssel und dem Algorithmus und Senden der RRC-Abbaunachricht unter Nutzung der SRB1.

9. Verfahren nach Anspruch 8, wobei die RRC-Abbaunachricht so konfiguriert ist, dass, nachdem das UE die RRC-Abbaunachricht empfangen hat,
das UE Daten zur wiederaufgebauten SRB1 decodiert, um die RRC-Abbaunachricht zu erfassen, die Konfiguration in Abhängigkeit von den Konfigurationsinformationen in der RRC-Abbaunachricht aktualisiert und in einen entsprechenden RRC-Zustand eintritt.

10. Kommunikationsgerät (600), das Folgendes umfasst:
einen Prozessor (610) und einen Speicher (620), wobei der Speicher konfiguriert ist, um ein Computerprogramm zu speichern, und der Prozessor konfiguriert ist, um das im Speicher gespeicherte Computerprogramm aufzurufen und abzuarbeiten, um das Verfahren nach einem der Ansprüche 1 bis 9 zu implementieren.

11. Chip (700), der Folgendes umfasst: einen Prozessor (710), der konfiguriert ist, um ein Computerprogramm aus einem Speicher aufzurufen und abzuarbeiten, um zu ermöglichen, dass ein Gerät mit dem Chip das Verfahren nach einem der Ansprüche 1 bis 9 implementiert.

12. Computerlesbares Speichermedium, das konfiguriert ist, um ein Computerprogramm zu speichern, wobei das Computerprogramm ermöglicht, dass ein Computer das Verfahren nach einem der Ansprüche 1 bis 9 implementiert.

13. Computerprogrammprodukt, das einen Computerprogrammbefehl umfasst, wobei der Computerprogrammbefehl ermöglicht, dass ein Computer das Verfahren nach einem der Ansprüche 1 bis 9 implementiert.

## Revendications

1. Procédé de transmission d'informations, comprenant :
la transmission (301), par une première station de base, d'un message de requête de récupération de contexte d'équipement utilisateur, noté UE, à une deuxième station de base suite à la réception d'un message de requête de reprise de commande de ressources radio, notée RRC, transmis par un UE ;
la réception (302), par la première station de base, d'un message d'échec de récupération de contexte d'UE transmis par la deuxième station de base, le message d'échec de récupération de contexte d'UE comprenant un message de libération RRC avec des informations associées relatives au message de libération RRC ; et
la transmission (303), par la première station de base, du message de libération RRC à l'UE sur la base des informations associées relatives au message de libération RRC,
les informations associées relatives au message de libération RRC comprenant une clé et un algorithme, et la clé étant générée au niveau de la deuxième station de base au moyen d'un identifiant de cellule physique, noté PCI, et d'un numéro de canal radiofréquence absolu, noté ARFCN, de la deuxième station de base.

2. Procédé selon la revendication 1, dans lequel les informations associées relatives au message de libération RRC comprennent en outre des informations de transmission.

3. Procédé selon la revendication 1 ou 2, dans lequel la transmission, par la première station de base, du message de requête de récupération de contexte d'UE à la deuxième station de base suite à la réception du message de requête de reprise RRC transmis par l'UE comprend :
l'adressage, par la première station de base, de la deuxième station de base selon un premier identifiant d'utilisateur véhiculé dans le message de requête de reprise RRC suite à la réception du message de requête de reprise RR transmis par l'UE, et la transmission du message de requête de récupération de contexte d'UE à la deuxième station de base.

4. Procédé selon l'une quelconque des revendications 1 à 3, dans lequel le message de requête de récupération de contexte d'UE véhicule :
une valeur de motif pour le déclenchement d'un processus de reprise RRC ; et/ou
des premières informations d'indication, les premières informations d'indication étant configurées pour indiquer qu'un objectif du processus de reprise RRC est une mise à jour de localisation périodique.

5. Procédé selon la revendication 4, dans lequel la deuxième station de base est configurée pour vérifier une MAC-I véhiculée dans le message de requête de récupération de contexte d'UE, déterminer s'il convient ou non d'exécuter un processus de reprise RRC sans transfert d'un contexte d'UE sur la base de premières informations en cas de succès de la vérification, et transmettre le message d'échec de récupération de contexte d'UE à la première station de base suite à la détermination qu'il convient d'exécuter le processus de reprise RRC sans transfert du contexte d'UE.

6. Procédé selon la revendication 5, dans lequel les premières informations comprennent :
la valeur de motif pour le déclenchement du processus de reprise RRC véhiculée dans le message de requête de récupération de contexte d'UE ; et/ou
les premières informations d'indication véhiculées dans le message de requête de récupération de contexte d'UE, les premières informations d'indication étant configurées pour indiquer que l'objectif du processus de reprise RRC est une mise à jour de localisation périodique ; et/ou
des informations d'expiration de temporisateur de mise à jour de localisation ; et/ou
des informations d'indication configurées pour indiquer l'arrivée ou non de données de liaison descendante.

7. Procédé selon l'une quelconque des revendications 1 à 6, dans lequel le message d'échec de récupération de contexte d'UE comprend en outre :
des informations de configuration relatives à un pont de routage source, noté SRB1, et des informations d'indication configurées pour indiquer un état RRC que l'UE doit adopter.

8. Procédé selon la revendication 7, dans lequel la transmission, par la première station de base, du message de libération RRC à l'UE sur la base des informations associées relatives au message de libération RRC comprend :
la construction, par la première station de base, du SRB1 sur la base des informations de configuration relatives au SRB1, la réalisation d'un traitement de chiffrement et de protection d'intégrité sur le message de libération RRC sur la base de la clé et de l'algorithme, et la transmission du message de libération RRC au moyen du SRB1.

9. Procédé selon la revendication 8, dans lequel le message de libération RRC est configuré de telle manière que, suite à la réception, par l'UE, du message de libération RRC,
l'UE décode des données sur le SRB1 en reprise afin d'acquérir le message de libération RRC, met à jour une configuration selon les informations de configuration dans le message de libération RRC et adopte un état RRC correspondant.

10. Dispositif de communication (600), comprenant : un processeur (610) et une mémoire (620), la mémoire étant configurée pour stocker un programme d'ordinateur, le processeur étant configuré pour appeler et exécuter le programme d'ordinateur stocké dans la mémoire afin de mettre en œuvre le procédé selon l'une quelconque des revendications 1 à 9.

11. Puce (700), comprenant : un processeur (710), configuré pour appeler et exécuter un programme d'ordinateur à partir d'une mémoire afin de permettre à un dispositif doté de la puce de mettre en œuvre le procédé selon l'une quelconque des revendications 1 à 9.

12. Support de stockage lisible par ordinateur, configuré pour stocker un programme d'ordinateur, le programme d'ordinateur permettant à un ordinateur de mettre en œuvre le procédé selon l'une quelconque des revendications 1 à 9.

13. Produit-programme d'ordinateur, comprenant une commande de programme d'ordinateur, la commande de programme d'ordinateur permettant à un ordinateur de mettre en œuvre le procédé selon l'une quelconque des revendications 1 à 9.
